# EUROPEAN PATENT APPLICATION

(11) **EP 3 796 308 A1**
(43) Date of publication of application: **24.03.2021**
(21) Application number: 19219968.5
(22) Date of filing: 30.12.2019
(51) Int. Cl.: G10L 15/22, G06F 3/16, G10L 15/08

(54) **SPEECH RECOGNITION CONTROL METHOD AND APPARATUS, ELECTRONIC DEVICE AND READABLE STORAGE MEDIUM**

(30) Priority: 19.09.2019 CN 201910888231
(71) Applicant: Baidu Online Network Technology (Beijing) Co., Ltd., Beijing 100085 (CN)
(72) Inventor: LUO, Yongxi, Beijing, 100085 (CN); WANG, Shasha, Beijing, 100085 (CN)
(74) Representative: Zimmermann, Tankred Klaus

(57) **Abstract**

The present disclosure discloses a speech recognition control method and apparatus, an electronic device and a readable storage medium. The method includes the following. In a first operation state, a target operation carrying a set control intention is detected (101). In the first working state, an audio clip is acquired based on a wake-up word to perform speech recognition. When the target operation is detected, a control instruction corresponding to the target operation is executed, and the first operation state is switched to a second operation state (102). In the second operation state, audio is continuously acquired to obtain an audio stream to perform the speech recognition (103).

## Description

### FIELD

The present disclosure relates to the field of speech recognition and artificial intelligence, and more particularly, to a speech recognition control method and apparatus, an electronic device and a readable storage medium.

### BACKGROUND

With the continuous development of artificial intelligence and terminal technology and spread of artificial intelligence products, such as smart speakers and other electronic devices, , a user can control an electronic device in voice to execute a control instruction. When the user performs voice interaction with the electronic device, the user needs to input a wake-up word. In this case, when the user continuously interacts with the electronic device, the user needs to repeatedly input the wake-up word, which is extremely inconvenient.

### SUMMARY

The present disclosure seeks to solve one of the technical problems in the related art to at least some extent.

The present disclosure provides a speech recognition control method, a speech recognition control apparatus, an electronic device and a readable storage medium, to allow a user to continuously interact with the electronic device through triggering a target operation carrying a set control intention without frequently inputting a wake-up word, thereby simplifying operations and improving user experience.

Embodiments according to a first aspect of the present disclosure provide a speech recognition control method. The method includes:
detecting a target operation carrying a set control intention in a first operation state; in which in the first operation state, an audio clip is acquired based on a wake-up word to perform speech recognition;
in response to detecting the target operation, executing a control instruction corresponding to the target operation, and switching the first operation state into a second operation state; and
continuously acquiring audio to obtain an audio stream in the second operation state to perform the speech recognition.

Embodiments according to a second aspect of the present disclosure provide a speech recognition control apparatus. The apparatus includes:
a detection module, configured to detect a target operation carrying a set control intention in a first operation state, in which in the first operation state, an audio clip is acquired based on a wake-up word to perform speech recognition;
an execution module, configured to, in response to detecting the target operation, execute a control instruction corresponding to the target operation, and switch the first operation state into a second operation state; and
a collection module, configured to continuously acquire audio in the second operation state to obtain an audio stream to perform the speech recognition.

Embodiments according to a third aspect of the present disclosure provide an electronic device. The electronic device includes:
at least one processor; and
a memory connected in communication with the at least one processor;
in which the memory is configured to stores instruction executable by the at least one processor, and the instructions are executed by the at least one processor such that the at least one processor is configured to execute a speech recognition control method provided by embodiments according to the first aspect of the present disclosure.

Embodiments according to a fourth aspect of the present disclosure provide a non-transitory computer-readable storage medium, having computer instructions stored thereon, in which the computer instructions are executed by a computer such that the computer is configured to execute a speech recognition control method provided by embodiments according to the first aspect of the present disclosure.

The present disclosure has the following advantages or beneficial effects.

The target operation carrying the set control intention is detected in the first operation state. In the first operation state, the audio clip is acquired based on the wake-up word to perform the speech recognition, when the target operation is detected, the control instruction corresponding to the target operation is executed, and the first operation state is switched to the second operation state. Audio is continuously acquired to obtain the audio stream in the second operation state to perform the speech recognition. Consequently, the user may continuously interact with the electronic device through triggering the target operation carrying the set control intention without frequently inputting the wake-up word, thereby simplifying operations and improving the user experience.

Other effects of the foregoing optional manners will be described below with reference to specific embodiments.

### BRIEF DESCRIPTION OF THE DRAWINGS

The accompanying drawings are used for a better understanding of the solution, and do not constitute a limitation on the present disclosure. These and other aspects and advantages of embodiments of the present disclosure will become apparent and more readily appreciated from the following descriptions made with reference to the accompanying drawings.
FIG. 1 is a flowchart illustrating a speech recognition control method according to some embodiments of the present disclosure.
FIG. 2 is a flowchart illustrating a speech recognition control method according to some embodiments of the present disclosure.
FIG. 3 is a flowchart illustrating a speech recognition control method according to some embodiments of the present disclosure.
FIG. 4 is a flowchart illustrating a speech recognition control method according to some embodiments of the present disclosure.
FIG. 5 is a block diagram illustrating a speech recognition control apparatus according to some embodiments of the present disclosure.
FIG. 6 is a block diagram illustrating a speech recognition control apparatus according to some embodiments of the present disclosure.
FIG. 7 is a block diagram illustrating an electronic device according to some embodiments of the present disclosure.

### DETAILED DESCRIPTION

The following describes exemplary embodiments of the present disclosure with reference to the accompanying drawings, and details of the embodiments of the present disclosure are included to facilitate understanding, in which the details should be considered as merely exemplary. Therefore, those skilled in the art should recognize that various changes and modifications may be made to the embodiments described herein without departing from the scope and spirit of the present disclosure. Also, for clarity and conciseness, descriptions of well-known functions and structures are omitted in the following description.

A speech recognition control method and apparatus, an electronic device and a readable storage medium according to the embodiments of the present disclosure will be described below with reference to the drawings.

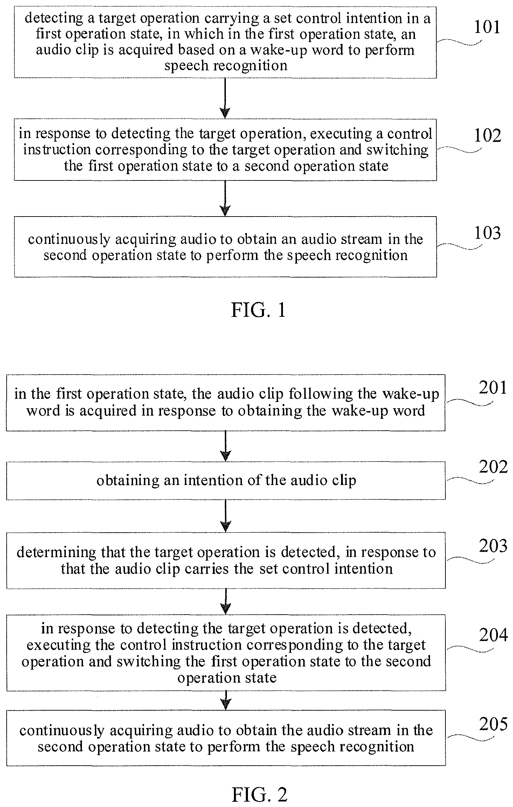

FIG. 1 is a flowchart illustrating a speech recognition control method according to some embodiments of the present disclosure.

As an example, in the present disclosure, the speech recognition control method may be applicable to a speech recognition control apparatus. The speech recognition control apparatus may be applied to an electronic device which may be configured to perform a speech recognition control function.

The electronic device may be a personal computer (PC), a cloud device, a mobile device, a smart speaker, etc. The mobile device may be a hardware device with an operating system, a touch screen and/or a display, such as a phone, a tablet computer, a personal digital assistant, a wearable device, an on-board device, etc.

As illustrated in FIG. 1, the speech recognition control method may include the following.

At block 101, a target operation carrying a set control intention is detected in a first operation state. In the first working state, an audio clip is acquired based on a wake-up word to perform speech recognition.

In an example of the present disclosure, the first operation state may be a non-listening state. When the electronic device is in the non-listening state, a user may input the wake-up word in voice to wake up the electronic device for subsequent speech recognition.

In an example of the present disclosure, the wake-up word may be preset by a built-in program of the electronic device. In another example, in order to meet the personalized needs of the user, the wake-up word may be set by the user based on his/her needs. The present disclosure is not limited to the above. For example, when the electronic device is a smart speaker, the wake-up word may be "Xiaodu, Xiaodu".

In an example of the present disclosure, the set control intention may be preset by the built-in program of the electronic device. In another example, in order to improve flexibility and applicability of the method, the set control intention may be set by the user. The present disclosure is not limited to the above. For example, the set control intention may be "playing an audio/video", "querying weather" and the like.

In an example of the present disclosure, when the electronic device is in the first operation state, the electronic device may detect whether the wake-up word is input. When it is detected that the wake-up word is input, the audio clip following the wake-up word may be acquired to perform the speech recognition. For example, the electronic device may be the smart speaker and the smart speaker may be in the first operation state. When the user wants to play a song via the smart speaker, the user may input "Xiaodu, Xiaodu, play song A" or "Xiaodu, Xiaodu, I want to listen to a song" in voice. The electronic device may recognize the audio clip "play song A" or "I want to listen to a song" following the wake-up word and play the song.

In an example of the present disclosure, when the electronic device is in the first operation state, the speech recognition control apparatus may monitor whether the target operation carrying the set control intention is triggered. When it is monitored that the target operation carrying the set control intention is triggered, a block 102 may be performed. When it is monitored that the target operation carrying the set control intention is not triggered, the apparatus may continue monitoring the triggering of the target operation, or monitoring the inputting of the wake-up word. When it is monitored that the wake-up word is input, the audio clip following the wake-up word may be recognized. In other words, when it is monitored that the target operation carrying the set control intention is not triggered, the electronic device keeps the first operation state, i.e., the non-listening state. When the user wants to control the electronic device in voice, he/she needs to input the wake-up word in voice. For example, when the user wants to play a song via the electronic device, the user may enter "Xiaodu, Xiaodu, I want to listen to a song".

At block 102, when the target operation is detected, a control instruction corresponding to the target operation is executed, and the first operation state is switched to a second operation state.

In an example of the present disclosure, the second operation state may be a listening state. When the electronic device is in the listening state, the user may input a speech instruction in real time to interact with the electronic device, without inputting the wake-up word in voice.

In an example of the present disclosure, when the speech recognition control apparatus detects the target operation, indicating that the user has a requirement for a real-time interaction or continuous interaction with the electronic device, the first operation state may be switched to the second operation state and the control instruction corresponding to the target operation may be executed.

For example, the electronic device may be a smart speaker and the set control intention may be "querying weather". when the user inputs "Xiaodu, Xiaodu, how is the weather today" in voice, the smart speaker may determine that the intention of the audio clip following the wake-up word is the "querying weather" after acquiring and recognizing audio data input by the user. It may be determined that the target operation carrying the set control intention is triggered. The operation state of the electronic device may be switched from the non-listening state to the listening state, and the weather may be queried and provided to the user, and/or the weather information may be displayed on an interface.

At block 103, audio is continuously acquired to obtain an audio stream in the second operation state to perform the speech recognition.

In an example of the present disclosure, when the electronic device is in the second operation state, the electronic device may continuously acquire the audio to obtain the audio stream for the speech recognition. Therefore, when the user has a requirement of real-time interaction or continuous interaction with the electronic device, the user may continuously interact with the electronic device by triggering the target operation carrying the set control intention, without frequently inputting the wake-up word, thereby simplifying operations and improving user experience.

In an example, when the smart speaker is in the listening state, the user may continuously interact with the smart speaker, for example, inputting "what's the weather tomorrow?", "play a song", etc., without inputting the wake-up word. Therefore, the human-machine conversation is natural and authentic, enhancing the user's immersive experience.

It should be noted that terms such as "first" and "second" are used herein for purposes of description and are not intended to indicate or imply relative importance or significance. Thus, a feature defined with "first" and "second" may refer to one or more features.

With the speech recognition control method according to embodiments of the present disclosure, the target operation carrying the set control intention is detected in the first operation state. In the first operation state, the audio clip is acquired based on the wake-up word to perform the speech recognition. When the target operation is detected, the control instruction corresponding to the target operation is executed and the first operation state is switched to the second operation state. The audio is continuously acquired to obtain the audio stream in the second operation state to perform the speech recognition. Consequently, the user may continuously interact with the electronic device simply by triggering the target operation carrying the set control intention, without frequently inputting the wake-up word, thereby simplifying operations and improving the user experience.

As a possible implementation, when the electronic device is in the first operation state, the user may trigger the target operation in voice. The above process will be described in detail below.

FIG. 2 is a flowchart illustrating a speech recognition control method according to some embodiments of the present disclosure.

As illustrated in FIG. 2, the speech recognition control method may include the following.

At block 201, in the first operation state, the audio clip following the wake-up word is acquired when the wake-up word is obtained.

In an example of the present disclosure, when the electronic device is in the first operation state, the electronic device may detect whether the wake-up word is input. When it is detected that the wake-up word is input, the electronic device may acquire the audio clip following the wake-up word to perform the speech recognition.

At block 202, an intention of the audio clip is obtained.

In an example of the present disclosure, the speech recognition may be performed on the audio clip based on the speech recognition technology to determine the intention of the audio clip. For example, the audio clip may be recognized based on the speech recognition technology to determine text information corresponding to the audio clip. The text information may be semantically recognized to determine the intention of the audio clip. For example, when the audio clip is "I want to listen to a song", the intention of the audio clip may be "listening to a song" or "playing an audio/video".

At block 203, it is determined that the target operation is detected when the audio clip carries the set control intention.

In an example of the present disclosure, when the intention of the audio clip matches the set control intention, it may be determined that the target operation is detected. When the intention of the audio clip does not match the set control intention, it may be determined that the target operation is not detected.

At block 204, when the target operation is detected, the control instruction corresponding to the target operation is executed, and the first operation state is switched to the second operation state.

At block 205, the audio is continuously acquired to obtain the audio stream in the second operation state to perform the speech recognition.

For execution processes of blocks 204 to 205, reference may be made to the execution processes of blocks 102 to 103 above, and thus details will not be repeated herein.

For example, the electronic device may be the smart speaker and the set control intention may be "playing an audio/video". When the user inputs "Xiaodu, Xiaodu, I want to listen to a song" in voice, the smart speaker may determine that the intention of the audio clip of "I want to listen to a song" may be "playing an audio/video" after acquiring and recognizing audio data input by the user. It may be determined that the intention of the audio clip matches the set control intention. Therefore, the song may be played, and the working state of the electronic device may be switched from the non-listening state to the listening state, such that the user may continuously interact with the smart speaker, such as inputting "playing the next song", "stopping playing the song", etc. Consequently, the human-machine conversation is natural and authentic, enhancing the user's immersive experience.

For example, the electronic device may be the smart speaker and the set control intention may be "playing a next song". When the user inputs "Xiaodu, Xiaodu, play the next song" in voice while the smart speaker is playing a song, the smart speaker may determine that the intention of the audio clip matches the set control intention. Consequently, the smart speaker may play the next song and switch the working state of the electronic device from the non-listening state to the listening state, such that that the user may conduct a continuous conversation with the smart speaker.

With the speech recognition control method according to embodiments of the present disclosure, when the user has a requirement for an real-time interaction or continuous interaction with the electronic device, the user may interact with the electronic device in real time when the audio data input in voice matches the set control intention, without frequently inputting the wake-up word, thereby simplifying the operations and improving user experience.

In an example, when the electronic device is in the first operation state, the user may trigger the target operation manually. The above process may be described in detail below.

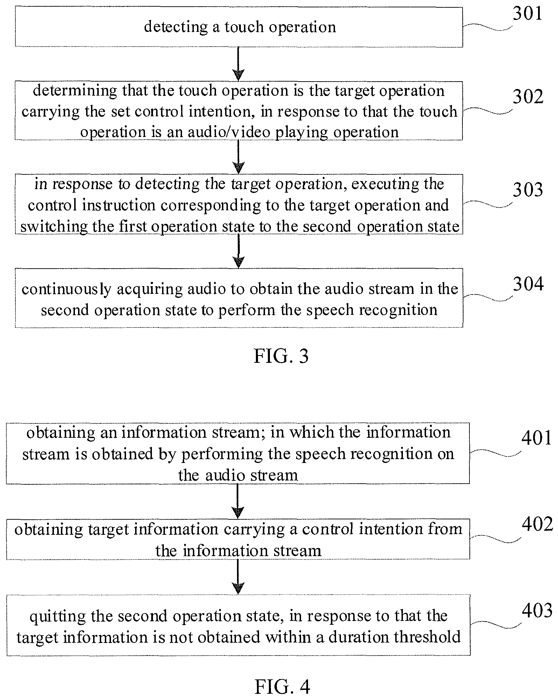

FIG. 3 is a flowchart illustrating a speech recognition control method according to some embodiments of the present disclosure.

As illustrated in FIG. 3, the speech recognition control method may include the following.

At block 301, a touch operation is detected.

In an example of the present disclosure, the speech recognition control apparatus may monitor the touch operation triggered by the user. The touch operation may be a click operation, a selection operation, an input operation and the like.

At block 302, it is determined that the touch operation is the target operation carrying the set control intention when the touch operation is an audio/video playing operation.

In an example, when the touch operation is the audio/video playing operation, for example, the user clicks the audio/video on a display interface of the electronic device, it may be determined that the touch operation is the target operation carrying the set control intention, i.e., the set control intention is "playing an audio/video". When the touch operation is not the audio/video playing operation, for example, the user edits a message, posts a message, modifies information, it may be determined that the touch operation is not the target operation carrying the set control intention.

In other words, in the present disclosure, the touch operation may be determined as the target operation when the touch operation carries the corresponding set control intention. In this case, it may be considered that the user has the requirement for the real-time interaction or continuous interaction. Therefore, subsequent actions may be performed. When the touch operation does not carry the corresponding set control intention, it is determined that the touch operation is not the target operation. In this case, it may be considered that the user does not have the requirement for the real-time interaction or continuous interaction. Therefore, the electronic device may keep the first operation state.

At block 303, when the target operation is detected, the control instruction corresponding to the target operation is executed, and the first operation state is switched to the second operation state.

At block 304, the audio is continuously acquired to obtain the audio stream in the second operation state to perform the speech recognition.

For execution processes of blocks 303 to 304, reference may be made to the execution processes of blocks 102 to 103 above, and thus details will not be repeated herein.

As an application scenario, the electronic device may be the smart speaker. When the user clicks a video file displayed on the display interface, it may be determined that the touch operation triggered by the user is the target operation carrying the control intention. Therefore, the video file may be played and the operation state of the electronic device may be switched from the non-listening state to the listening state, such that the user may continuously interact with the smart speaker.

With the speech recognition control method according to embodiments of the present disclosure, when the user has the requirement for the real-time interaction or continuous interaction with the electronic device, the user may continuously interact with the electronic device by triggering the audio/video playing operation, without frequently inputting the wake-up word, thereby simplifying the operations and improving the user experience.

In an example, the electronic device may have various operation modes, such as a normal mode, a child mode, a geek mode and the like. The user may switch the operation mode of the electronic device in voice or manually. In related arts, different operation modes are mutually exclusive.

In this case, the electronic device may be controlled to enter one operation mode each time, which may not meet actual requirements of the user. For example, the user may have a requirement for both the child mode and the geek mode to experience a full-duplex wake-up-free function. Obviously, the related art cannot meet such a requirement.

With the speech recognition control method according to embodiments of the present disclosure, both the child mode and the geek mode may be on. In the child mode, when the target operation carrying the set control intention is triggered, for example, by inputting the wake-up word and the set control intention in voice or by triggering the audio/video playing operation, the electronic device may directly enter the geek mode. Therefore, the user may continuously interact with the electronic device in the child mode, without repeatedly waking up the electronic device, thereby improving the user experience.

In other words, the geek mode may be activated as a function in the child mode. In the non-listening state, when it is detected that the target operation carrying the set control intention is triggered, the electronic device may be switched to the listening state of the geek mode and the control instruction corresponding to the target operation may be executed. Therefore, in the child mode, the user may continuously interact with the electronic device, without repeatedly waking up the electronic device.

In an example, when the electronic device is in the second operation state, on the display interface of the electronic device, a first element may be replaced by a second element, and a third element may be hidden. The first element is configured to indicate that the electronic device is in the first operation state, the second element is configured to indicate that the electronic device is in the second operation state, and the third element is configured to indicate the wake-up word.

In an example, the electronic device may be the smart speaker and the set control intention may be "playing an audio/video". When the smart speaker in the child mode receives input "Xiaodu, Xiaodu, I want to see an animation film" of the user in voice, the intention of the audio clip "I want to see an animation film" is "playing an audio/video", and the smart speaker may determine that the target operation is detected. Therefore, the smart speaker enters the listening state of the geek mode. In the listening state, the third element may be hidden since it is unnecessary to wake up the device. In addition, in order to facilitate getting current state information of the smart speaker, the first element on the interface may be replaced by the second element.

In an example, when the electronic device is in the second operation state, the user may continuously interact with the electronic device, without repeatedly inputting the wake-up word. Accordingly, the electronic device may obtain the audio stream input by the user in voice and perform the speech recognition on the audio stream, to determine whether the audio stream contains the control intention. When the audio stream contains the control intention, the control instruction corresponding to the control intention may be executed. When the audio stream does not contain the control intention, it may be indicated that the user does not have a control requirement, and the electronic device may quit the second operation state. Hereinafter, the above process will be described in detail below.

FIG. 4 is a flowchart illustrating a speech recognition control method according to some embodiments of the present disclosure.

As illustrated in FIG. 4, based on the above illustrated in FIGS. 1 to 3, the speech recognition control method may further include the following.

At block 401, an information stream is obtained. The information stream is obtained by performing the speech recognition on the audio stream.

In an example, after the audio data is input, the electronic device may obtain the audio stream and perform the speech recognition on the audio stream to determine the information stream.

At block 402, target information carrying a control intention is obtained from the information stream.

In an example, after the information stream is obtained, the information stream may be semantically recognized to determine the control intention, and the target information carrying the control intention may be obtained from the information stream.

At block 403, the second operation state may be quitted when the target information is not obtained within a duration threshold.

In an example, the duration threshold may be preset. For example, the duration threshold may be preset by a built-in program of the electronic device, or may be set by the user. The present disclosure is not limited to the above. For example, the duration threshold may be 90 seconds.

In an example, when the target information is obtained within the duration threshold, it may be indicated that the user has no intention to control the electronic device. Therefore the device may quit the second operation state.

For example, when the electronic device enters the listening state, if the user does not input the speech data within the duration threshold, or the electronic device does not obtain the control intention from the recognized audio stream, the electronic device may quit the listening state. For example, the child mode and the geek mode are both on. When the listening state of the geek mode is quitted, the electronic device is in the child mode, and the user may interact with the electronic device in the child mode. When the user wants to control the electronic device, the user needs to input the wake-up word.

In an example, the second operation state may be quitted when the target information is not obtained within the duration threshold. Therefore, when the user does not have the intention to control the electronic device, the electronic device may be controlled to quit the second operation state, thereby reducing power consumption of the electronic device since the electronic device is not keeping in the listening state or the working state.

In order to implement the above, the present disclosure also provides a speech recognition control apparatus.

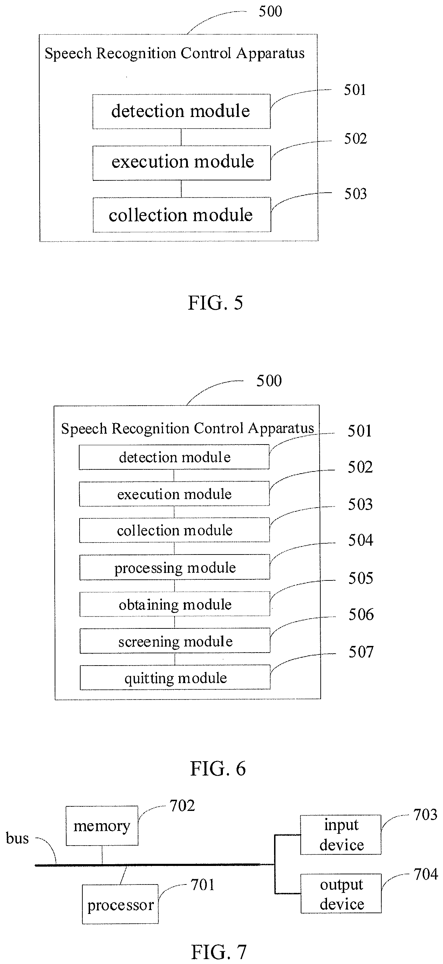

FIG. 5 is a block diagram illustrating a speech recognition control apparatus according to some embodiments of the present disclosure.

As illustrated in FIG. 5, the speech recognition control apparatus 500 may include a detection module 501, an execution module 502 and a collection module 503.

The detection module 501 may be configured to detect a target operation carrying a set control intention in a first operation state. In the first operation state, the audio clip is acquired based on a wake-up word to perform speech recognition.

As a possible implementation, the detection module 501 may be configured to: acquire the audio clip following the wake-up word when the wake-up word is obtained; obtain an intention of the audio clip; and determine that the target operation is detected when the audio clip carries the set control intention.

As another possible implementation, the detection module 501 may be configured to: detect a touch operation; and determine that the touch operation is the target operation carrying the set control intention when the touch operation is an audio/video playing operation.

The execution module 502 may be configured to, when the target operation is detected, execute the control instruction corresponding to the target operation, and switch the first operation state into a second operation state.

The collection module 503 may be configured to continuously acquire audio in the second operation state to obtain the audio stream, to perform the speech recognition.

Further, in a possible implementation, referring to FIG. 6, based on the above illustrated in FIG. 5, the speech recognition control apparatus 500 may further include a processing module 504, an obtaining module 505, a screening module 506 and a quitting module 507.

The processing module 504 may be configured to, in the second operation state, replace a first element with a second element and hide a third element, on an interface. The first element may be configured to indicate that the electronic device is in the first operation state, the second element may be configured to indicate that the electronic device is in the second operation state, and the third element is configured to indicate the wake-up word.

The obtaining module 505 may be configured to obtain a information stream. The information stream may be obtained by performing the speech recognition on the audio stream.

The screening module 506 may be configured to obtain target information carrying the control intention from the information stream.

The quitting module 507 may be configured to quit the second operation state when the target information is not obtained within a duration threshold.

It should be noted that the explanation of the speech recognition control method above is also applicable to the speech recognition control apparatus, and thus details will not be described herein again.

With the speech recognition control apparatus according to embodiments of the present disclosure, the target operation carrying the set control intention is detected in the first operation state. In the first operation state, the audio clip is acquired based on the wake-up word, to perform the speech recognition. When the target operation is detected, the control instruction corresponding to the target operation is executed, and the first operation state is switched to the second operation state. The audio is continuously acquired to obtain the audio stream in the second operation state, so as to perform the speech recognition. Consequently, the user may continuously interact with the electronic device by triggering the target operation carrying the set control intention, without frequently inputting the wake-up word, thereby simplifying operations and improving the user experience.

In order to implement the above, the present disclosure further provides an electronic device. The electronic device may include: at least one processor and a memory connected in communication with the at least one processor. The memory may store instructions executable by the at least one processor. The instructions may be executed by the at least one processor such that at least one processor may be configured to execute the speech recognition control method described above.

In order to implement the above embodiments, the present disclosure further provides a non-transitory computer-readable storage medium, having computer instructions stored thereon. The computer instructions are configured to enable a computer to execute the speech recognition control method as described above.

According to the present disclosure, the present disclosure further provides an electronic device and a readable storage medium.

FIG. 7 is a block diagram of an electronic device for a speech recognition control method according to embodiments of the present disclosure. The electronic device is intended to represent various forms of digital computers, such as a laptop computer, a desktop computer, a workbench, a personal digital assistant, a server, a blade server, a mainframe computer and other suitable computers. The electronic device may also represent various forms of mobile devices, such as a personal digital processor, a cellular phone, a smart phone, a wearable device and other similar computing devices. Components shown herein, their connections and relationships as well as their functions are merely examples, and are not intended to limit the implementation of the present disclosure described and/or required herein.

As shown in FIG. 7, the electronic device includes: one or more processors 701, a memory 702, and interfaces for connecting various components, including a high-speed interface and a low-speed interface. The components are interconnected by different buses and may be mounted on a common motherboard or otherwise installed as required. The processor may process instructions executed within the electronic device, including instructions stored in or on the memory to display graphical information of the GUI on an external input/output device (such as a display device coupled to the interface). In other embodiments, when necessary, multiple processors and/or multiple buses may be used with multiple memories. Similarly, multiple electronic devices may be connected, each providing some of the necessary operations (for example, as a server array, a group of blade servers, or a multiprocessor system). One processor 701 is taken as an example in FIG. 7.

The memory 702 is a non-transitory computer-readable storage medium according to the present disclosure. The memory stores instructions executable by at least one processor, so that the at least one processor executes the speech recognition control method according to the present disclosure. The non-transitory computer-readable storage medium according to the present disclosure stores computer instructions, which are configured to make the computer execute the speech recognition control method according to the present disclosure.

As a non-transitory computer-readable storage medium, the memory 702 may be configured to store non-transitory software programs, non-transitory computer executable programs and modules, such as program instructions/modules (for example, the detection module 501, the execution module 502 and the obtaining module 503 shown in FIG. 5) corresponding to the speech recognition control method according to the embodiment of the present disclosure. The processor 701 executes various functional applications and performs data processing of the server by running non-transitory software programs, instructions and modules stored in the memory 702, that is, the speech recognition control method according to the foregoing method embodiments is implemented.

The memory 702 may include a storage program area and a storage data area, where the storage program area may store an operating system and applications required for at least one function; and the storage data area may store data created according to the use of the electronic device, and the like. In addition, the memory 702 may include a high-speed random access memory, and may further include a non-transitory memory, such as at least one magnetic disk memory, a flash memory device, or other non-transitory solid-state memories. In some embodiments, the memory 702 may optionally include memories remotely disposed with respect to the processor 701, and these remote memories may be connected to the electronic device through a network. Examples of the network include, but are not limited to, the Internet, an intranet, a local area network, a mobile communication network, and combinations thereof.

The electronic device may further include an input device 703 and an output device 704. The processor 701, the memory 702, the input device 703 and the output device 704 may be connected through a bus or in other manners. FIG. 7 is illustrated by establishing the connection through a bus.

The input device 703 may receive input numeric or character information, and generate key signal inputs related to user settings and function control of the electronic device, such as a touch screen, a keypad, a mouse, a trackpad, a touchpad, a pointing stick, one or more mouse buttons, trackballs, joysticks and other input devices. The output device 704 may include a display device, an auxiliary lighting device (for example, an LED), a haptic feedback device (for example, a vibration motor), and so on. The display device may include, but is not limited to, a liquid crystal display (LCD), a light emitting diode (LED) display and a plasma display. In some embodiments, the display device may be a touch screen.

Various implementations of systems and technologies described herein may be implemented in digital electronic circuit systems, integrated circuit systems, application-specific ASICs (application-specific integrated circuits), computer hardware, firmware, software, and/or combinations thereof. These various implementations may include: being implemented in one or more computer programs that are executable and/or interpreted on a programmable system including at least one programmable processor. The programmable processor may be a dedicated or general-purpose programmable processor that may receive data and instructions from a storage system, at least one input device and at least one output device, and transmit the data and instructions to the storage system, the at least one input device and the at least one output device.

These computing programs (also known as programs, software, software applications, or codes) include machine instructions of a programmable processor, and may implement these calculation procedures by utilizing high-level procedures and/or object-oriented programming languages, and/or assembly/machine languages. As used herein, terms "machine-readable medium" and "computer-readable medium" refer to any computer program product, device and/or apparatus configured to provide machine instructions and/or data to a programmable processor (for example, a magnetic disk, an optical disk, a memory and a programmable logic device (PLD)), and includes machine-readable media that receive machine instructions as machine-readable signals. The term "machine-readable signals" refers to any signal used to provide machine instructions and/or data to a programmable processor.

In order to provide interactions with the user, the systems and technologies described herein may be implemented on a computer having: a display device (for example, a cathode ray tube (CRT) or a liquid crystal display (LCD) monitor) for displaying information to the user; and a keyboard and a pointing device (such as a mouse or trackball) through which the user may provide input to the computer. Other kinds of devices may also be used to provide interactions with the user; for example, the feedback provided to the user may be any form of sensory feedback (e.g., visual feedback, auditory feedback or haptic feedback); and input from the user may be received in any form (including acoustic input, voice input or tactile input).

The systems and technologies described herein may be implemented in a computing system that includes back-end components (for example, as a data server), a computing system that includes middleware components (for example, an application server), or a computing system that includes front-end components (for example, a user computer with a graphical user interface or a web browser, through which the user may interact with the implementation of the systems and technologies described herein), or a computing system including any combination of the back-end components, the middleware components or the front-end components. The components of the system may be interconnected by digital data communication (e.g., a communication network) in any form or medium. Examples of the communication network include: a local area network (LAN), a wide area network (WAN), and the Internet.

Computer systems may include a client and a server. The client and server are generally remote from each other and typically interact through the communication network. A client-server relationship is generated by computer programs running on respective computers and having a client-server relationship with each other.

With the technical solution according to embodiments of the present disclosure, the target operation carrying the set control intention is detected in the first operation state. In the first operation state, the audio clip is acquired based on the wake-up word, so as to perform the speech recognition. When the target operation is detected, the control instruction corresponding to the target operation is executed, and the first operation state is switched to the second operation state. The audio is continuously acquired to obtain the audio stream in the second operation state, so as to perform the speech recognition. Consequently, the user may continuously interact with the electronic device through triggering the target operation carrying the set control intention, without frequently inputting the wake-up word, thereby simplifying operations and improving the user experience.

It should be understood that various forms of processes shown above may be reordered, added or deleted. For example, the blocks described in the present disclosure may be executed in parallel, sequentially, or in different orders. As long as the desired results of the technical solutions disclosed in the present disclosure may be achieved, there is no limitation herein.

The foregoing specific implementations do not constitute a limit on the protection scope of the present disclosure. It should be understood by those skilled in the art that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A speech recognition control method, comprising:
detecting (101) a target operation carrying a set control intention in a first operation state; wherein in the first operation state, an audio clip is acquired based on a wake-up word to perform speech recognition;
in response to detecting the target operation, executing (102; 204; 303) a control instruction corresponding to the target operation, and switching the first operation state to a second operation state; and
continuously acquiring (103; 205; 304) audio to obtain an audio stream in the second operation state to perform the speech recognition.

2. The speech recognition control method according to claim 1, wherein detecting (101) the target operation carrying the set control intention comprises:
acquiring (201) the audio clip following the wake-up word, in response to obtaining the wake-up word;
obtaining (202) an intention of the audio clip; and
determining (203) that the target operation is detected, in response to that the audio clip carries the set control intention.

3. The speech recognition control method according to claim 1, wherein detecting the target operation carrying the set control intention comprises:
detecting (301) a touch operation; and
determining (302) that the touch operation is the target operation carrying the set control intention, in response to that the touch operation is an audio/video playing operation.

4. The speech recognition control method according to claim 2 or 3, further comprising:
in the second operation state, replacing a first element with a second element and hiding a third element, on an interface;
wherein, the first element is configured to indicate the first operation state, the second element is configured to indicate the second operation state, and the third element is configured to indicate the wake-up word.

5. The speech recognition control method according to any one of claims 1 to 4, further comprising:
obtaining (401) an information stream; wherein the information stream is obtained by performing the speech recognition on the audio stream;
obtaining (402) target information carrying a control intention from the information stream; and
quitting (403) the second operation state, in response to that the target information is not obtained within a duration threshold.

6. A speech recognition control apparatus (500), comprising:
a detection module (501), configured to detect a target operation carrying a set control intention in a first operation state; wherein in the first operation state, an audio clip is acquired based on a wake-up word to perform speech recognition;
an execution module (502), configured to, in response to detecting the target operation, execute a control instruction corresponding to the target operation and switch the first operation state into a second operation state; and
a collection module (503), configured to continuously acquire audio in the second operation state to obtain an audio stream to perform the speech recognition.

7. The speech recognition control apparatus (500) according to claim 6, wherein the detection module (501) is configured to:
acquire the audio clip following the wake-up word, in response to obtaining the wake-up word;
obtain an intention of the audio clip; and
determine that the target operation is detected, in response to that the audio clip carries the set control intention.

8. The speech recognition control apparatus (500) according to claim 6, wherein the detection module (501) is configured to:
detect a touch operation; and
determine that the touch operation is the target operation carrying the set control intention, in response to that the touch operation is an audio/video playing operation.

9. The speech recognition control apparatus (500) according to claim 7 or 8, further comprising:
a processing module (504), configured to, in the second operation state, replace a first element with a second element and hide a third element, on an interface;
wherein, the first element is configured to indicate the first operation state, the second element is configured to indicate the second operation state, and the third element is configured to indicate the wake-up word.

10. The speech recognition control apparatus (500) according to any one of claims 6 to 9, further comprising:
an obtaining module (505), configured to obtain an information stream; wherein the information stream is obtained by performing the speech recognition on the audio stream;
a screening module (506), configured to obtain target information carrying a control intention from the information stream; and
a quitting module (507), configured to quit the second operation state in response to that the target information is not obtained within a duration threshold.

11. A non-transitory computer-readable storage medium, having computer instructions stored thereon, wherein the computer instructions are executed by a computer, such that the computer is configured to execute a speech recognition control method according to any one of claims 1 to 5.
